# FASCICULE DE BREVET EUROPEEN

(11) **EP 2 043 786 B1**
(45) Date de publication et mention de la délivrance du brevet: **30.11.2016**
(21) Numéro de dépôt: 07823303.8
(22) Date de dépôt: 19.07.2007
(51) Int. Cl.: B01L 3/00, B01L 9/06, B65D 71/50, G01N 35/10

(54) **ENSEMBLE D'ANALYSE DESTINÉ À ÊTRE UTILISÉ DANS DES APPAREILS D'ANALYSE**
ANALYSEANORDNUNG ZUR VERWENDUNG IN ANALYSEGERÄTEN
ANALYSIS ASSEMBLY TO BE USED IN ANALYSIS DEVICES

(30) Priorité: 21.07.2006 FR 0606685
(43) Date de publication de la demande: 08.04.2009
(73) Titulaire: ImmunoDiagnostic System France, 21320 Pouilly en Auxois (FR)
(72) Inventeur: ROUSSEAU, Alain, F-75004 Paris (FR); LERAT, Olivier, F-21410 Agey (FR)
(74) Mandataire: Verriest, Philippe
(86) Numéro de dépôt international: PCT/FR2007/001241
(87) Numéro de publication internationale: WO 2008/009821

(56) Documents cités:
- EP-A1- 0 790 063
- EP-A2- 1 538 447
- WO-A-03/020427
- WO-A2-99/61919
- DE-A1- 19 540 877
- US-A- 4 350 253
- US-A- 5 322 668
- US-A- 5 655 673

## Description

La présente invention concerne un ensemble d'analyse destiné à être utilisée dans des appareils d'analyse.

Le document EP 0 871 894 décrit un premier type d'ensemble d'analyse. Cet ensemble d'analyse est constitué par une cartouche pour produits réactifs. Selon ce document, la cartouche comprend plusieurs récipients de produits réactifs fixés les uns aux autres par l'intermédiaire de glissières de couplage ménagées sur les faces transversales des récipients. Chaque récipient est constitué d'un corps formé par deux demi-coques obtenues par moulage par injection de matière synthétique et soudées par ultrasons, et d'un couvercle soudé par ultrasons sur l'ouverture délimitée par les demi-coques. En outre, chaque récipient comprend deux glissières de forme complémentaire venues de moulage avec les demi-coques respectives et ménagées respectivement sur chacune de ses faces transversales, chaque glissière étant destinée à coopérer avec une glissière complémentaire d'un récipient adjacent.

La fabrication de ces récipients nécessite le moulage par injection d'un nombre important de pièces et ensuite le soudage de ces pièces par ultrasons. Compte tenu du fait que le moulage par injection et le soudage par ultrasons nécessitent des outillages très coûteux, les coûts de fabrication des récipients et donc de la cartouche sont très élevés.

Le fait que les récipients soient assemblés par l'intermédiaire de glissières venues de moulage avec le corps des récipients nécessite une grande précision dans le moulage des demi-coques et impose donc une technique de moulage par injection pour réaliser les demi-coques. Ainsi, il n'est pas possible de réaliser ces demi-coques par une autre technique de moulage moins coûteuse.

De plus, l'assemblage d'un nombre important de pièces peut induire des risques de fuite des récipients et donc des mises au rebut d'un certain nombre de récipients.

En outre, pour identifier ces éventuels défauts de fuite des récipients, il est nécessaire de prévoir des moyens très coûteux sur la chaîne de fabrication des réservoirs.

Il en résulte que la fabrication et l'assemblage d'une cartouche telle que décrite dans le document EP 0 871 894 sont très complexes et coûteux.

Le document EP 1 432 516 décrit un second type d'ensemble d'analyse comprenant une cartouche pour produits réactifs et un portoir destiné à recevoir la cartouche.

Selon ce document, la cartouche comporte plusieurs récipients de produits réactifs réalisés en matière synthétique et assemblés les uns aux autres. Comme pour le document EP 0 871 894, chaque récipient est constitué d'un corps formé par deux demi-coques obtenues par moulage par injection de matière synthétique et soudées par ultrasons, et d'un couvercle soudé par ultrasons sur l'ouverture délimitée par les demi-coques.

Ainsi, de même que précédemment, les coûts de fabrication de ces cartouches sont très élevés puisque les récipients sont obtenus par moulage par injection d'un nombre important de pièces et par soudage de ces pièces par ultrasons.

Le portoir décrit dans le document EP 1 432 516 comprend un logement ouvert vers le haut destiné à recevoir la base des récipients de produits réactifs formant la cartouche, et des moyens de maintien en position des récipients. Ces moyens de maintien en position comportent d'une part des rainures d'encliquetage ménagées sur la paroi avant du portoir et destinées à coopérer avec des nervures complémentaires ménagées sur les faces longitudinales avant des récipients, et d'autre part des encoches verticales ménagées sur la paroi de fond du portoir et destinées à coopérer avec des crochets verticaux ménagés sur les faces longitudinales arrières des récipients.

La réalisation des crochets et des nervures d'encliquetage venus de moulage avec le corps des récipients nécessite une grande précision dans le moulage des demi-coques formant le corps des récipients, ce qui impose donc une technique de moulage par injection pour réaliser les demi-coques. Ainsi, il n'est pas possible de réaliser ces demi-coques par une autre technique de moulage moins coûteuse.

Il en résulte que la fabrication d'un ensemble d'analyse tel que décrit dans le document EP 1 432 516 est très complexe et coûteuse.

Le document US4350253 dévoile un portoir comprenant plusieurs encoches dans lesquelles sont suspendus des flacons individuels au niveau du col.

La présente invention vise à remédier à ces inconvénients.

Le problème technique à la base de l'invention consiste donc à fournir un ensemble d'analyse de structure simple et dont les coûts de fabrication sont fortement diminués

A cet effet, l'invention concerne un ensemble d'analyse selon la revendication 1.

Ainsi, le maintien en position des récipients formant la cartouche Ainsi, le maintien en position des récipients formant la cartouche sur le portoir d'appareil d'analyse est obtenu par coopération du col de chaque récipient avec des moyens de maintien en position ménagés sur le portoir. Par conséquent, il n'est pas nécessaire de ménager des moyens de maintien en position complexes directement sur les récipients. Ceci permet donc de simplifier la fabrication des récipients et donc de diminuer les coûts de fabrication de la cartouche et donc de l'ensemble d'analyse.

Il en résulte que les coûts de fabrication des récipients et donc de la cartouche sont fortement diminués par rapport à ceux des cartouches de l'art antérieur.

Avantageusement, la distance entre les axes de deux cols contigus est un multiple de la distance entre deux encoches adjacentes.

De ce fait, il est possible d'utiliser des récipients de différents volumes pour former la cartouche, tout en étant assuré que le col de chaque récipient sera parfaitement en regard de l'encoche respective ménagée sur le portoir lorsque la cartouche sera montée sur ce dernier.

Avantageusement, le portoir comporte une paroi de fond sensiblement verticale dont le bord longitudinal supérieur comprend un retour sensiblement perpendiculaire dans lequel sont ménagées les encoches.

De préférence, le retour comporte une succession d'encoches régulièrement réparties sur sa longueur.

Selon une autre caractéristique de l'invention, le bord longitudinal inférieur de la paroi de fond comporte un retour sensiblement perpendiculaire comprenant un rebord sensiblement parallèle à la paroi de fond, le rebord et la paroi de fond formant avec le retour le logement destiné à recevoir la base des récipients de produits réactifs.

Avantageusement, le portoir comporte un système d'agitation comprenant un support tubulaire d'axe vertical monté mobile en rotation sur le portoir et présentant sur sa surface extérieure des moyens d'entraînement en rotation.

De préférence, les moyens d'entraînement en rotation comportent une roue dentée destinée à être entraînée en rotation par un mécanisme d'entraînement d'un appareil d'analyse.

Selon un mode de réalisation de l'invention, chaque récipient est réalisé en matière synthétique et en une pièce, le col de chaque récipient étant venu de moulage par soufflage avec le corps du récipient respectif.

Ainsi, chaque récipient de la cartouche est réalisé directement en une seule pièce par moulage par soufflage de matière synthétique.

De ce fait, il n'est pas nécessaire de prévoir des moyens de moulage par injection et des moyens de soudage par ultrasons très coûteux.

Selon un autre mode de réalisation de l'invention, chaque récipient comprend deux faces longitudinales sensiblement parallèles destinées à coopérer avec le portoir et deux faces transversales de forme complémentaire, les faces transversales de deux récipients contigus tournées l'une vers l'autre prenant appui l'une contre l'autre.

Avantageusement, la cartouche comporte des récipients de différents volumes. Il est donc possible d'effectuer des analyses nécessitant l'utilisation de différents produits réactifs dans différentes quantités.

Selon une caractéristique de l'invention, les récipients sont fixés les uns aux autres par l'intermédiaire d'une bande autocollante entourant ces derniers.

Ainsi, il n'est pas nécessaire de prévoir des moyens mécaniques complexes et coûteux pour réaliser l'assemblage des différents récipients. Ceci permet donc de diminuer encore les coûts de fabrication de la cartouche.

De préférence, la bande autocollante forme une étiquette comportant sur sa face extérieure des indications concernant la cartouche, notamment l'identification des produits réactifs utilisés et l'analyse à effectuer, les indications étant réalisées par exemple sous la forme d'un code à barres.

Selon une autre caractéristique de l'invention, le dispositif d'obturation de chaque récipient est formé par un bouchon dont la jupe présente, sur sa face interne, des moyens de fixation par vissage ou encliquetage sur le col du récipient et dont le fond, au moins partiellement ouvert, est équipé d'une membrane perforable.

Selon une autre caractéristique de l'invention, l'ensemble d'analyse comporte un flacon tubulaire monté dans le support tubulaire, l'axe du flacon tubulaire étant décalé par rapport à l'axe du support tubulaire.

Ce décalage entre l'axe du flacon tubulaire et l'axe du support tubulaire permet d'assurer une agitation orbitale de la solution contenue dans le flacon lorsque la roue dentée du support est entraînée en rotation par le mécanisme d'entraînement de l'appareil d'analyse. Ainsi, lorsque la solution contient des particules magnétiques destinées à capturer l'analyte que l'on veut analyser, ce mouvement orbital du flacon évite une agglutination des particules magnétiques contre la surface intérieure de celui-ci.

Ces particules magnétiques étant plus denses que l'eau, elles ont tendances à sédimenter dans le flacon. Or, il est important que ces particules magnétiques soient en suspension dans la solution pendant l'analyse.

De ce fait, avant d'effectuer une analyse, l'opérateur retire le flacon du support tubulaire, le secoue et ensuite le replace dans le support tubulaire. Cette opération de mise en suspension des particules magnétiques est simplifiée par rapport à celles mises en oeuvre avec les cartouches décrites dans les documents EP 1 432 516 et EP 0 871 894. En effet, selon ces documents, le flacon fait partie intégrante de la cartouche, ce qui nécessite de secouer toute la cartouche pour mettre en suspension les particules magnétiques contenues dans le flacon.

De plus, contrairement aux documents EP 1 432 516 et EP 0 871 894, les moyens d'entraînement en rotation du flacon ne sont pas ménagés directement sur le flacon qui est jetable mais sur le support tubulaire. Ceci permet de minimiser les coûts de fabrication du flacon et donc de l'ensemble d'analyse.

De préférence, la paroi intérieure du flacon comporte des ailettes longitudinales. Ceci permet d'améliorer l'agitation des particules magnétiques lorsque le flacon est entraîné en rotation.

Avantageusement, la paroi extérieure du flacon comporte une rainure longitudinale destinée à coopérer avec une nervure complémentaire ménagée sur la paroi intérieure du support tubulaire afin d'assurer une immobilisation du flacon dans le support.

De toute façon l'invention sera bien comprise à l'aide de la description qui suit en référence au dessin schématique annexé représentant, à titre d'exemple non limitatif, une forme d'exécution de cette cartouche.
Figure 1 est une vue en perspective d'une cartouche selon l'invention.
Figure 2 est une vue en perspective d'un portoir selon l'invention.
Figure 3 est une vue en perspective d'un ensemble d'analyse selon l'invention en cours de montage.
Figure 4 est une vue en perspective d'un ensemble d'analyse selon l'invention monté.

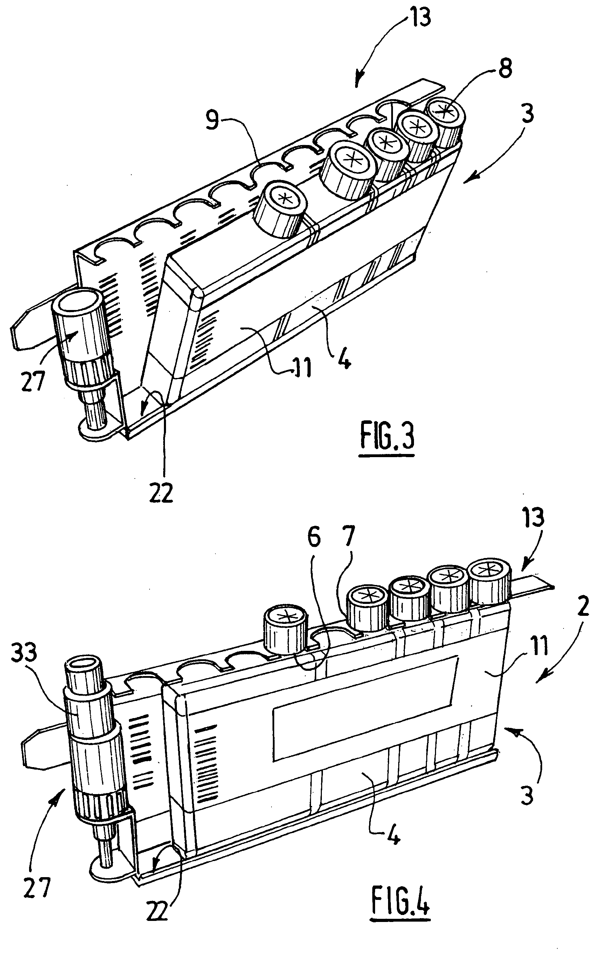

La figure 4 représente un ensemble d'analyse 2 destiné à être utilisé dans des appareils d'analyse.

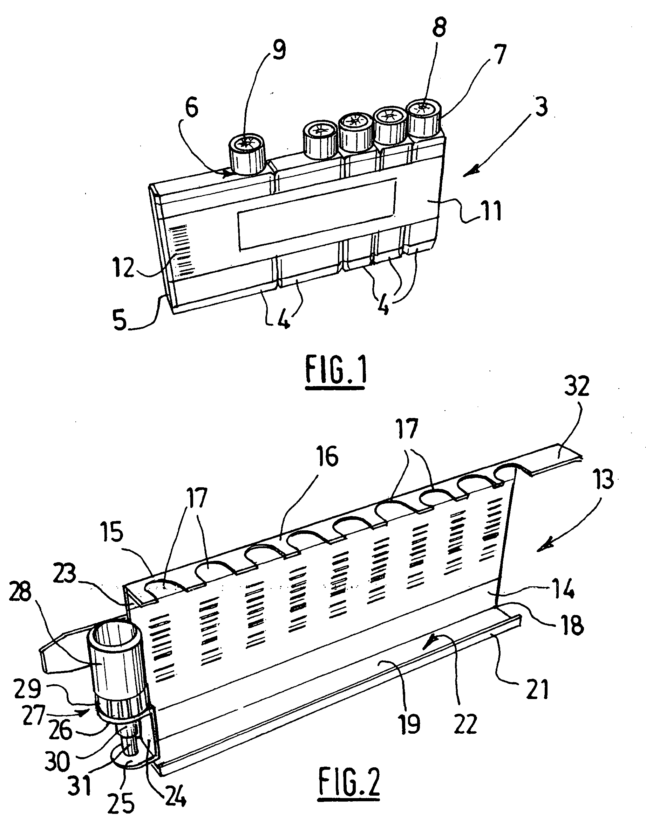

Comme plus particulièrement montré sur la figure 1, l'ensemble d'analyse 2 comprend une cartouche 3 pour produits réactifs comportant cinq récipients 4 de produits réactifs renfermant chacun un produit réactif liquide.

Chaque récipient 4 est réalisé en matière synthétique en une pièce et comprend un corps 5 et un col 6 venus de moulage par soufflage. Le corps 5 de chaque récipient a une forme générale rectangulaire vue en coupe et comprend deux faces longitudinales sensiblement parallèles destinées à coopérer avec un portoir d'appareil d'analyse et deux faces transversales de forme complémentaire. Les faces transversales de deux récipients contigus tournées l'une vers l'autre prennent appui l'une contre l'autre.

Il doit être noté que le col 6 de chaque récipient est équipé d'un dispositif d'obturation 7 et est destiné à coopérer avec une encoche de forme complémentaire ménagée sur le portoir d'analyse. Le dispositif d'obturation de chaque récipient est formé par un bouchon 7 dont la jupe présente, sur sa face interne, des moyens de fixation par vissage ou encliquetage sur le col du récipient et dont le fond, au moins partiellement ouvert, est équipé d'une membrane perforable 8. La membrane perforable comprend plusieurs fentes 9 permettant une insertion ou un retrait aisé(e) d'une sonde ou d'une aiguille de l'appareil d'analyse dans le récipient.

Ces différents récipients 4 sont fixés les uns aux autres par l'intermédiaire d'une étiquette autocollante 11 entourant ces derniers. L'étiquette autocollante 11 comporte, sur sa face extérieure, un code à barres 12 renfermant des indications concernant la cartouche, notamment par exemple l'identification des produits réactifs utilisés et l'analyse à effectuer.

La cartouche 3 comprend trois récipients identiques de 10 ml ainsi qu'un récipient de 20 ml et un autre de 40 ml. Dans ce cas, l'analyse à effectuer nécessite donc l'utilisation de cinq produits réactifs différents et dans différentes quantités pour déterminer la présente d'une substance précise dans un échantillon à analyser.

Toutefois, compte tenu de la diversité des analyses pouvant être réalisées par l'appareil d'analyse, le nombre, la taille et le positionnement des récipients utilisés peuvent varier.

Comme plus particulièrement montré à la figure 2, l'ensemble d'analyse 2 comprend également un portoir 13 réalisé en matière synthétique. Le portoir 13 comporte une paroi de fond 14 sensiblement verticale dont le bord longitudinal supérieur 15 comprend un retour longitudinal 16 s'étendant sensiblement perpendiculairement à la paroi de fond et sur toute la longueur de cette dernière. Le retour 16 comprend neuf encoches 17 régulièrement réparties sur sa longueur, chaque encoche 17 étant destinée à coopérer avec le col d'un récipient de produits réactifs de la cartouche.

Le bord transversal inférieur 18 de la paroi de fond comporte un retour longitudinal 19 s'étendant sensiblement perpendiculairement à la paroi de fond 14 et sur toute la longueur de cette dernière. Le retour 19 comprend un rebord 21 sensiblement parallèle à la paroi de fond 14 et s'étendant sur toute la longueur de celui-ci.

Le rebord 21 et la paroi de fond 14 forment avec le retour 16 un logement 22 ouvert vers le haut destiné à recevoir la base d'au moins un récipient de produits réactifs.

Il doit être noté que les premier et second retours forment respectivement les parois supérieure et inférieure du portoir.

Le bord transversal 23 de la paroi de fond tourné vers l'appareil d'analyse comprend un retour 24 transversal s'étendant sensiblement perpendiculairement à la paroi de fond et sur une portion de ce bord transversal. Il doit être noté que les trois retours présentent sensiblement la même largeur.

Le retour 24 comporte une patte inférieure 25 et une patte supérieure 26 s'étendant vers l'extérieur perpendiculairement à celui-ci. Chaque patte comprend un orifice traversant circulaire, les deux orifices étant coaxiaux.

Le portoir 13 comporte également un système d'agitation comprenant un support tubulaire 27 monté mobile en rotation sur le retour 24. Le support tubulaire comporte un corps cylindrique 28 présentant sur sa surface extérieure une roue dentée 29 destinée à être entraînée en rotation par un mécanisme d'entraînement d'un appareil d'analyse. Le corps cylindrique 28 est prolongé successivement par une première portion cylindrique 30 et une seconde portion cylindrique 31 de plus faible diamètre, les deux portions cylindriques étant coaxiales avec le corps cylindrique 27. La première portion cylindrique 30 est engagée dans l'orifice de la patte supérieure 26 tandis que la seconde portion cylindrique 31 est engagée dans l'orifice de la patte inférieure 25.

Il est à noter que la seconde portion cylindrique 31 comprend, au niveau de son extrémité libre, un cliquet coopérant avec la face inférieure de la patte inférieure 25 afin de bloquer en translation le support tubulaire par rapport au portoir.

Le portoir comporte également une poignée 32 solidaire du retour 16 permettant une insertion et un retrait de la cartouche du dispositif d'analyse.

Pour fixer la cartouche 3 sur le portoir 13, il suffit d'engager tout d'abord la base de chaque récipient dans le logement 22 du portoir, puis d'engager le col de chaque récipient dans l'encoche respective 17. Il doit être noté que les encoches s'étendent dans un plan sensiblement perpendiculaire à l'axe des cols des récipients lorsque ces derniers sont fixés sur le portoir.

Afin d'assurer une bonne fixation des récipients sur le portoir, l'espace entre la face supérieure de chaque récipient et la face inférieure du bouchon d'obturation 7 correspond sensiblement à l'épaisseur du retour 16, et la forme de chaque encoche 17 est complémentaire de celle du col de chaque récipient. En outre, la bonne fixation des récipients sur le portoir est également obtenue du fait que l'espace entre le retour inférieur 19 et le retour supérieur 16 correspond sensiblement à la hauteur des récipients 4.

Il doit être noté que les encoches 17 limitent également les déplacements latéraux des récipients par rapport au portoir 13.

Comme montré à la figure 4, l'ensemble d'analyse comprend également un flacon tubulaire 33 monté de manière amovible dans le support tubulaire 27, l'axe du flacon tubulaire étant décalé par rapport à l'axe du support tubulaire. Avantageusement, le flacon tubulaire comporte des ailettes longitudinales ménagées sur sa paroi intérieure et renferme une solution contenant des particules magnétiques destinées à capturer l'analyte que l'on veut analyser.

Il doit être noté que la paroi extérieure du flacon comporte une rainure longitudinale coopérant avec une nervure complémentaire ménagée sur la paroi intérieure du support tubulaire afin d'assurer une immobilisation du flacon dans le support.

Comme il va de soi, l'invention ne se limite pas à la seule forme d'exécution de cette cartouche, décrite ci-dessus à titre d'exemple, elle en embrasse au contraire toutes les variantes de réalisation. C'est ainsi notamment que le nombre d'encoches et/ou de récipients pourrait être différent. En outre, le portoir 13 pourrait être métallique, et par exemple réalisé en acier inoxydable, ce qui améliorerait la conductivité thermique et électrique pour la détection du niveau de produits réactifs dans les récipients.

## Revendications

1. Ensemble d'analyse destiné à être utilisé dans un appareil d'analyse, comprenant :
- une cartouche (3) pour produits réactifs comportant plusieurs récipients (4) de produits réactifs assemblés les uns aux autres, chaque récipient comprenant un col (6) équipé d'un dispositif d'obturation (7), et
- un portoir (13) destiné à recevoir la cartouche (3), le portoir comprenant un logement (22) ouvert vers le haut destiné à recevoir la base des récipients (4) de produits réactifs formant la cartouche, et des moyens de maintien en position des récipients (4) de produits réactifs, situés à distance du logement (22),
**caractérisé en ce que** les moyens de maintien en position sont agencés pour coopérer avec les cols (6) des récipients (4) de produits réactifs lorsque les bases de ces derniers sont reçues dans le logement (22), les moyens de maintien en position comprenant plusieurs encoches (17) ménagées sur le portoir (13) et destinées à coopérer chacune avec le col (6) d'un récipient (4) de produits réactifs lorsque sa base est reçue dans le logement (22), les encoches (17) s'étendant dans un plan sensiblement perpendiculaire à l'axe des cols (6) des récipients (4) lorsque ces derniers sont fixés sur le portoir (13).

2. Ensemble d'analyse selon la revendication 1, **caractérisé en ce que** la distance entre les axes de deux cols (6) contigus est un multiple de la distance entre deux encoches adjacentes (17).

3. Ensemble d'analyse selon l'une des revendication 1 et 2, **caractérisé en ce que** le portoir comporte une paroi de fond (14) sensiblement verticale dont le bord longitudinal supérieur (15) comprend un retour (16) sensiblement perpendiculaire dans lequel sont ménagées les encoches (17).

4. Ensemble d'analyse selon la revendication 3, **caractérisé en ce que** le retour (16) comporte une succession d'encoches (17) régulièrement réparties sur sa longueur.

5. Ensemble d'analyse selon l'une des revendications 3 ou 4, **caractérisé en ce que** le bord longitudinal inférieur (18) de la paroi de fond (14) comporte un retour (19) sensiblement perpendiculaire comprenant un rebord (21) sensiblement parallèle à la paroi de fond, le rebord et la paroi de fond formant avec le retour le logement (22) destiné à recevoir la base des récipients (4) de produits réactifs.

6. Ensemble d'analyse selon l'une des revendications 1 à 5, **caractérisé en ce que** le portoir (13) comporte un système d'agitation comprenant un support tubulaire (27) d'axe vertical monté mobile en rotation sur le portoir et présentant sur sa surface extérieure des moyens d'entraînement en rotation (29).

7. Ensemble d'analyse selon la revendication 6, **caractérisé en ce que** les moyens d'entraînement en rotation comportent une roue dentée (29) destinée à être entraînée en rotation par un mécanisme d'entraînement d'un appareil d'analyse.

8. Ensemble d'analyse selon l'une des revendications 1 à 7, **caractérisé en ce que** chaque récipient (4) est réalisé en matière synthétique et en une pièce, le col (6) de chaque récipient (4) étant venu de moulage par soufflage avec le corps (5) du récipient respectif.

9. Ensemble d'analyse selon l'une des revendications 1 à 8, **caractérisé en ce que** chaque récipient (4) comprend deux faces longitudinales sensiblement parallèles destinées à coopérer avec le portoir (13) et deux faces transversales de forme complémentaire, les faces transversales de deux récipients (4) contigus tournées l'une vers l'autre prenant appui l'une contre l'autre.

10. Ensemble d'analyse selon l'une des revendications 1 à 9, **caractérisé en ce que** la cartouche (3) comporte des récipients (4) de différents volumes.

11. Ensemble d'analyse selon l'une des revendications 1 à 10, **caractérisé en ce que** les récipients (4) sont fixés les uns aux autres par l'intermédiaire d'une bande autocollante (11) entourant ces derniers.

12. Ensemble d'analyse selon la revendication 11, **caractérisé en ce que** la bande autocollante (11) forme une étiquette comportant sur sa face extérieure des indications concernant la cartouche, notamment l'identification des produits réactifs utilisés et l'analyse à effectuer, les indications étant réalisées par exemple sous la forme d'un code à barres (12).

13. Ensemble d'analyse selon l'une des revendications 1 à 12, **caractérisé en ce que** le dispositif d'obturation de chaque récipient (4) est formé par un bouchon (7) dont la jupe présente, sur sa face interne, des moyens de fixation par vissage ou encliquetage sur le col (6) du récipient et dont le fond, au moins partiellement ouvert, est équipé d'une membrane perforable (8).

14. Ensemble d'analyse selon l'une des revendications 6 à 13, **caractérisé en ce qu'**il comporte un flacon tubulaire (33) monté dans le support tubulaire (27), l'axe du flacon tubulaire étant décalé par rapport à l'axe du support tubulaire.

15. Ensemble d'analyse selon la revendication 14, **caractérisé en ce que** la paroi intérieure du flacon (33) comporte des ailettes longitudinales.

16. Ensemble d'analyse selon l'une des revendications 14 ou 15, **caractérisé en ce que** la paroi extérieure du flacon (33) comporte une rainure longitudinale destinée à coopérer avec une nervure complémentaire ménagée sur la paroi intérieure du support tubulaire (27) afin d'assurer une immobilisation du flacon (33) dans le support (27).

## Patentansprüche

1. Analyseeinheit, die dazu bestimmt ist, in einem Analysegerät verwendet zu werden, Folgendes umfassend:
- eine Kassette (3) für Reagenzien, mehrere Reagenzbehälter (4) umfassend, die miteinander zusammengesetzt sind, wobei jeder Behälter einen Hals (6) umfasst, der mit einer Abdeckvorrichtung (7) ausgestattet ist, und
- ein Rack (13), das dazu bestimmt ist, die Kassette (3) aufzunehmen, wobei das Rack eine nach oben offene Aufnahme (22) umfasst, die dazu bestimmt ist, die Basis der Reagenzbehälter (4) aufzunehmen, welche die Kassette bilden, sowie Positionshaltemittel für die Reagenzbehälter (4), die sich im Abstand zur Aufnahme (22) befinden,
**dadurch gekennzeichnet, dass** die Positionshaltemittel ausgeführt sind, um mit den Hälsen (6) der Reagenzbehälter (4) zusammenzuwirken, wenn die Basen dieser letzteren in der Aufnahme (22) aufgenommen werden, wobei die Positionshaltemittel mehrere Einkerbungen (17) umfassen, die auf dem Rack (13) ausgeführt sind, und dazu bestimmt sind, jeweils mit dem Hals (6) eines Reagenzbehälters (4) zusammenzuwirken, wenn dessen Basis in der Aufnahme (22) aufgenommen wird, wobei sich die Einkerbungen (17) über eine Ebene erstrecken, die in etwa senkrecht zur Achse der Hälse (6) der Behälter (4) verläuft, wenn diese letzteren auf dem Rack (13) befestigt sind.

2. Analyseeinheit nach Anspruch 1, **dadurch gekennzeichnet, dass** der Abstand zwischen den Achsen zweier aneinandergrenzender Hälse (6) einem Vielfachen des Abstands zwischen zwei benachbarten Einkerbungen (17) entspricht.

3. Analyseeinheit nach einem der Ansprüche 1 und 2, **dadurch gekennzeichnet, dass** das Rack eine in etwa vertikale Rückwand (14) umfasst, deren oberer Längsrand (15) eine in etwa senkrechte Rückführung (16) umfasst, in die die Einkerbungen (17) eingearbeitet sind.

4. Analyseeinheit nach Anspruch 3, **dadurch gekennzeichnet, dass** die Rückführung (16) eine Reihe von Einkerbungen (17) umfasst, die regelmäßig über ihre Länge verteilt sind.

5. Analyseeinheit nach einem der Ansprüche 3 oder 4, **dadurch gekennzeichnet, dass** die untere Längskante (18) der Rückwand (14) eine in etwa senkrechte Rückführung (19) umfasst, die eine in etwa parallel zur Rückwand verlaufende Kante (21) umfasst, wobei die Kante und die Rückwand mit der Rückführung die Aufnahme (22) bilden, die dazu bestimmt ist, die Basis der Reagenzbehälter (4) aufzunehmen.

6. Analyseeinheit nach einem der Ansprüche 1 bis 5, **dadurch gekennzeichnet, dass** das Rack (13) ein Rührsystem umfasst, das einen röhrenförmigen Halter (27) mit vertikaler Achse umfasst, der drehbar auf dem Rack montiert ist, und an seiner Außenfläche Drehantriebsmittel (29) aufweist.

7. Analyseeinheit nach Anspruch 6, **dadurch gekennzeichnet, dass** die Drehantriebsmittel ein Zahnrad (29) umfassen, das dazu bestimmt ist, durch einen Antriebsmechanismus eines Analysegeräts in Drehung versetzt zu werden.

8. Analyseeinheit nach einem der Ansprüche 1 bis 7, **dadurch gekennzeichnet, dass** jeder Behälter (4) aus einem Kunststoff und in einem Stück gefertigt ist, wobei der Hals (6) eines jeden Behälters (4) mit dem Körper (5) des jeweiligen Behälters blasgeformt wird.

9. Analyseeinheit nach einem der Ansprüche 1 bis 8, **dadurch gekennzeichnet, dass** jeder Behälter (4) zwei in etwa parallel verlaufende Längsflächen umfasst, die dazu bestimmt sind, mit dem Rack (13) zusammenzuwirken, sowie zwei quer verlaufende Flächen in ergänzender Form, wobei die quer verlaufenden Flächen zweier benachbarter und einander zugewandter Behälter (4) aneinander anliegen.

10. Analyseeinheit nach einem der Ansprüche 1 bis 9, **dadurch gekennzeichnet, dass** die Kassette (3) Behälter (4) mit unterschiedlichen Volumina umfasst.

11. Analyseeinheit nach einem der Ansprüche 1 bis 10, **dadurch gekennzeichnet, dass** die Behälter (4) durch ein selbstklebendes Band (11), welches letztere umgibt, miteinander befestigt sind.

12. Analyseeinheit nach Anspruch 11, **dadurch gekennzeichnet, dass** das selbstklebende Band (11) ein Etikett bildet, das an seiner Außenfläche Hinweise die Kassette betreffend, vor allem die Identifizierung der verwendeten Reagenzien und der durchzuführenden Analyse, umfasst, wobei die Hinweise beispielsweise in Form eines Barcodes (12) ausgeführt sind.

13. Analyseeinheit nach einem der Ansprüche 1 bis 12, **dadurch gekennzeichnet, dass** die Abdeckvorrichtung eines jeden Behälters (4) durch einen Stopfen (7) gebildet wird, dessen Schürze auf Ihrer Innenfläche Mittel zur Befestigung durch Verschrauben oder Einrasten am Hals (6) des Behälters aufweist, und dessen zumindest teilweise offener Boden mit einer perforierbaren Membran (8) versehen ist.

14. Analyseeinheit nach einem der Ansprüche 6 bis 13, **dadurch gekennzeichnet, dass** sie ein röhrenförmiges Reagenzglas (33) umfasst, das im röhrenförmigen Halter (27) montiert ist, wobei die Achse des röhrenförmigen Reagenzglases im Verhältnis zur Achse des röhrenförmigen Halters versetzt ist.

15. Analyseeinheit nach Anspruch 14, **dadurch gekennzeichnet, dass** die Innenwand des Reagenzglases (33) längs verlaufende Flügel umfasst.

16. Analyseeinheit nach einem der Ansprüche 14 oder 15, **dadurch gekennzeichnet, dass** die Außenwand des Reagenzglases (33) eine längs verlaufende Einkerbung umfasst, die dazu bestimmt ist, mit einer ergänzenden Rippe zusammenzuwirken, die an der Innenwand des röhrenförmigen Halters (27) angeordnet ist, um für eine Blockierung des Reagenzglases (33) im Halter (27) zu sorgen.

## Claims

1. An analysis assembly intended to be used in an analysis apparatus, comprising:
- a cartridge (3) for reagent products including several containers (4) of reagent products assembled to each other, each container comprising a neck (6) equipped with a closing device (7), and
- a rack (13) intended to receive the cartridge (3), the rack comprising a housing (22) open upwardly and intended to receive the base of the containers (4) of reagent products forming the cartridge, and means for holding in position the containers (4) of reagent products, located away from the housing (22),
**characterized in that** the position holding means are arranged to cooperate with the necks (6) of the containers (4) of reagent products when the bases of the latter are received in the housing (22), the position holding means comprising several notches (17) formed on the rack (13) and each intended to cooperate with the neck (6) of a container (4) of reagent products when its base is received in the housing (22), the notches (17) extending in a plane substantially perpendicular to the axis of the necks (6) of the containers (4) when the latter are fastened on the rack (13).

2. The analysis assembly according to claim 1, **characterized in that** the distance between the axes of two contiguous necks (6) is a multiple of the distance between two adjacent notches (17).

3. The analysis assembly according to any of claims 1 and 2, **characterized in that** the rack includes an end wall (14) substantially vertical whose upper longitudinal edge (15) comprises a substantially perpendicular flange (16) in which the notches (17) are formed.

4. The analysis assembly according to claim 3, **characterized in that** the flange (16) includes a succession of notches (17) regularly distributed over its length.

5. The analysis assembly according to any of claims 3 or 4, **characterized in that** the lower longitudinal edge (18) of the end wall (14) includes a substantially perpendicular flange (19) comprising a rim (21) substantially parallel to the end wall, the rim and the end wall forming, with the flange, the housing (22) intended to receive the base of the containers (4) of reagent products.

6. The analysis assembly according to any of claims 1 to 5, **characterized in that** the rack (13) includes a stirring system comprising a tubular support (27) with a vertical axis movably mounted in rotation on the rack and having on its outer surface rotational drive means (29).

7. The analysis assembly according to claim 6, **characterized in that** the rotational drive means include a toothed wheel (29) intended to be driven in rotation by a driving mechanism of an analysis apparatus.

8. The analysis assembly according to any of claims 1 to 7, **characterized in that** each container (4) is made of synthetic material and in one piece, the neck (6) of each container (4) being integrally blow-molded with the body (5) of the respective container.

9. The analysis assembly according to any of claims 1 to 8, **characterized in that** each container (4) comprises two substantially parallel longitudinal faces intended to cooperate with the rack (13) and two transverse form-fitted faces, the transverse faces of two contiguous containers (4) facing each other and bearing against each other.

10. The analysis assembly according to any of claims 1 to 9, **characterized in that** the cartridge (3) includes containers (4) of different volumes.

11. The analysis assembly according to any of claims 1 to 10, **characterized in that** the containers (4) are fastened to each other through an self-adhesive strip (11) surrounding the latter.

12. The analysis assembly according to claim 11, **characterized in that** the self-adhesive strip (11) forms a label including, on its outer face, indications about the cartridge, in particular the identification of the reagent products and the analysis to be performed, the indications being performed for example in the form of a bar code (12).

13. The analysis assembly according to any of claims 1 to 12, **characterized in that** the closing device of each container (4) is formed by a cap (7) whose skirt has, on its inner face, means for fastening by screwing or snap-fitting onto the neck (6) of the container and whose bottom, at least partially open, is equipped with a pierceable membrane (8).

14. The analysis assembly according to any of claims 6 to 13, **characterized in that** it includes a tubular vial (33) mounted in the tubular support (27), the axis of the tubular vial being shifted relative to the axis of the tubular support.

15. The analysis assembly according to claim 14, **characterized in that** the inner wall of the vial (33) includes longitudinal fins.

16. The analysis assembly according to any of claims 14 or 15, **characterized in that** the outer wall of the vial (33) includes a longitudinal groove intended to cooperate with a complementary rib formed on the inner wall of the tubular support (27) in order to ensure an immobilization of the vial (33) in the support (27).
